Europäisches Patentamt

European Patent Office

Office européen des brevets

(11) Publication number: **0 387 021**
**A2**

## EUROPEAN PATENT APPLICATION

(21) Application number: 90302409.9

(22) Date of filing: 07.03.90

(51) Int. Cl.⁵: **B60J 5/06**

(30) Priority: 07.03.89 GB 8905163

(43) Date of publication of application:
**12.09.90 Bulletin 90/37**

(84) Designated Contracting States:
**BE DE ES FR IT NL**

(71) Applicant: **BOALLOY LIMITED**
**Radnor Park Trading Estate West Heath**
**Congleton Cheshire CW12 4QA(GB)**

(72) Inventor: **Broadbent, Edward Gerald, c/o**
**Boalloy Limited**
**Radnor Park Trading Estate, West Heath**
**Congleton, Chesshire CW12 4QA(GB)**

(74) Representative: **Massey, Alexander et al**
**MARKS & CLERK Suite 301 Sunlight House**
**Quay Street**
**Manchester, M3 3JY(GB)**

(54) Improvements in van bodies.

(57) A curtainsided van body has a front bulkhead constituted by end pillars and bulkhead sections bolted together with the bulkhead being bolted to the van body chassis.

As a result a controlled collapse of the front bulkhead occurs in the event of a collision and only individual damaged components of the front bulkhead require repair or replacement.

EP 0 387 021 A2

# IMPROVEMENTS IN VAN BODIES

This invention relates to van bodies, particularly curtainsided van bodies.

The van body may be mounted on a self-propelled or trailed vehicle or it may be a freight-carrying container or it may be mounted on or form part of a railway wagon. The term "van body" is to be construed herein and in the claims as including all of these structures.

A curtainsided van body generally comprises a floor or deck, a roof, a front bulkhead or wall connecting the floor and roof and a rear bulkhead or wall which may or may not include a door or doors. The two sides of the van body are generally open and are closed by curtains which can be tensioned or tautened horizontally and vertically when in the closed position.

More specifically, in a current curtainsided van body the front bulkhead is of unitary construction and is welded to the floor-mounting framework of the van body. In the event of an accident, say, collision with a bridge for example, the impact usually bends the front bulkhead rearwards damaging the side curtain-supporting rails and may, if the impact is sufficiently severe, cause upward twisting of the floor-mounting framework.

Such a damaged van body results in considerable off-the-road time, the duration of which depends upon the degree of damage. Usually, the damaged front bulkhead requires to be cut-away and replaced together with damaged side curtain rails with possibly straightening of the twisted floor-mounting framework also being necessary.

The present invention is particularly concerned with the construction of the front bulkhead, which at present are generally of welded construction, but is also pertinent to the rear bulkhead.

For convenience reference will hereinafter and in the claims be made, on occasion, to "a front bulkhead" but it is clearly to be understood that such references, where appropriate, also include rear bulkheads.

It is an object of the present invention to provide a front bulkhead for a curtainsided van body which is more versatile than existing front bulkheads and which, in case of accidents, is more easily repairable and less prone to transit damage to the remainder of the van body or the vehicle whereof the latter is part.

According to the present invention there is provided in or for a curtainsided van body a front bulkhead comprising a plurality of side-by-side sections including two end pillars bolted together and the front bulkhead being adapted to be bolted to the floor of the van body.

Preferably, the bolts connecting the front bulkhead to the floor are of predetermined shear strength.

Similarly, the bolts connecting the bulkhead sections and the end pillars are also of predetermined shear strength.

Preferably the front bulkhead is adapted to be also bolted to the van body roof.

Preferably the sections from which the bulkhead is formed and the end pillars are of channel section.

Preferably the material content of the channel sections are selected to suit the operational requirements of the user of the van body.

Preferably the bulkhead is constituted by five components, namely two outer or end pillars, two intermediate channel sections and a central channel section.

Preferably, the width of the central section can vary to provide bulkheads of overall different widths.

preferably the intermediate sections are formed of heavy duty metal relative to the outer pillars and the central section, the main bolting to the floor and the roof of the van body being effected through the end pillars which are bolted to the intermediate sections.

As aforesaid, different metals may be employed in the production of the different sections. For example, the outer pillars and the central section may be formed of alloy or aluminium allow for example, while the heavy duty intermediate sections are formed of heavy duty steel; or the outer pillars may be formed of stainless steel with the intermediate sections of mild or high tensile steel.

The load-carrying or bearing components are the intermediate sections and it is these which give the bulkhead its strength.

The bulkhead sections and end pillars may be formed by pressing or extrusion for example.

Preferably the van body at its rear has at each side a recess adapted to receive an end pillar of a rear bulkhead of bolted construction.

The rear bulkhead may, if desired, incorporate a door or doors.

An embodiment of the present invention will now be described, by way of example, with reference to the accompanying drawings, in which:-

Fig. 1 is a diagrammatic view of a curtainsided van body according to the invention;

Fig. 2 is a sectional plan view on the line II-II of Fig. 1 through the front bulkhead;

Figs. 3 and 4 are perspective fragmentary detail views of the front bulkhead to an enlarged scale;

Fig. 5 is a perspective fragmentary detail view of the top of the front bulkhead;

Figs. 6 and 7 are perspective fragmentary detail views of the top and bottom of the rear bulkhead;

Fig. 8 is a fragmentary detail side view of a mounting for a swinging pillar; and

Figs. 9 is a fragmentary perspective view of an end pillar of the front bulkhead.

The curtainsided van body comprises a roof 10, a floor or deck 11, a rear bulkhead 12 and a front bulkhead 13.

The two long sides 14 of the van body are open and are closed by curtains (not shown) as is well known, means being provided to tension or tauten the curtains when in the closed position both horizontally and vertically.

The floor 11 is constituted by a framework comprising main transverse front and rear bearers or chassis members 15, 16 joined by longitudinal bearers or chassis members 17, the bearers or chassis members being interconnected by floor-supporting members which mount the floor per se.

The present invention is particularly concerned with the front bulkhead 13 which is formed, in accordance with this invention, of various sections (see Fig. 2) bolted together.

The front bulkhead 13 is constituted by five components.

There are two end pillars 18, a central channel section 19 and two intermediate channel sections 20.

The end pillars 16 are also of channel section and mount curtain horizontally-tensioning mechanisms 21 as is well known to those skilled in the art. An example of such a mechanism is disclosed in our Patents GB-B-1262879 and GB-B-1262880.

The intermediate channel sections 20 each have a flange 22 overlapping the front of the adjacent end pillar 18, and the central channel section 19 has lateral flanges 23 overlapping the intermediate channel sections 20.

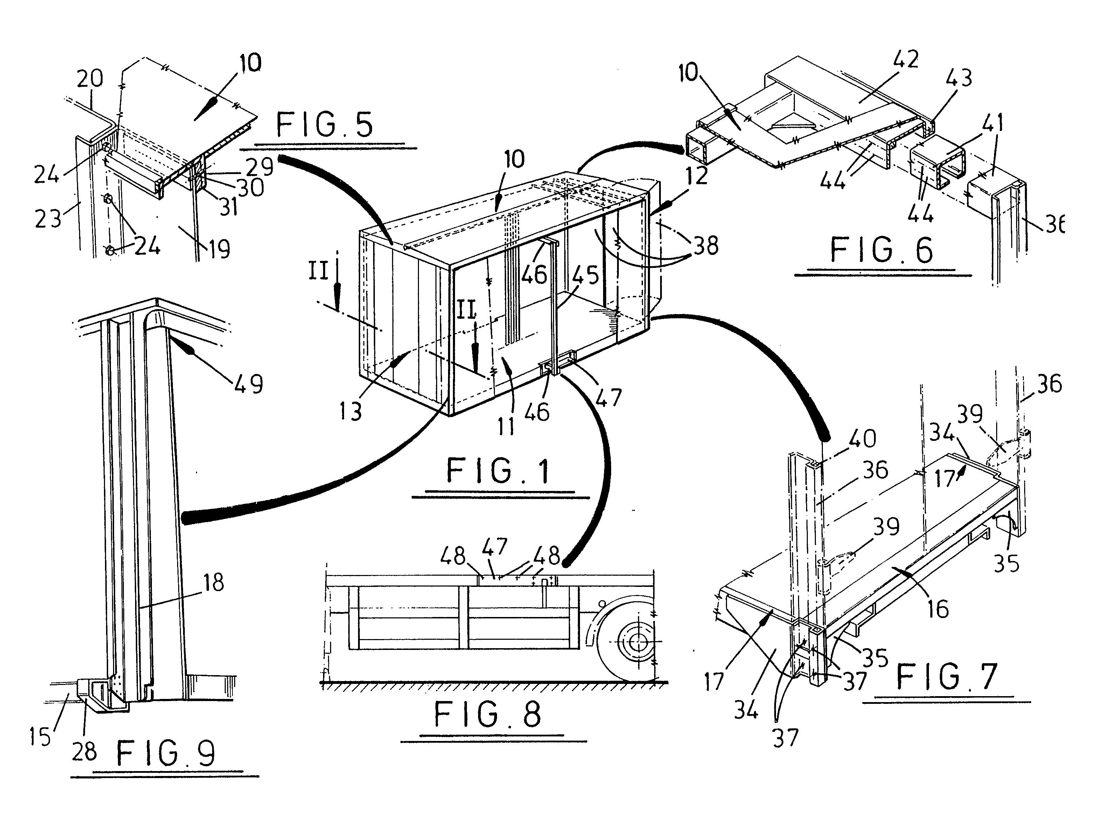

The intermediate channel sections 20 are bolted to their respect end pillars 18 by a series of vertically-spaced nuts and bolts generally indicated at 24 (see Fig. 5). The intermediate channel sections 20 are similarly bolted to the central channel section 19.

Each intermediate channel section 20 has bolted to it and its adjacent end pillar 18 as indicated at 26 an angle iron 27 which locates on top of an extension 28 of a main chassis member 17.

The front bulkhead 13 at the top is bolted to a top front header 29 supporting the roof 11 by a series of bolts 30 connecting the end pillars 18 and channel sections 19 and 20 to the top header 29.

A resilient pad 31 is interposed between the channel sections 19, 20 and possibly the end pillars 18 and the top header 29 to accommodate any flexure therebetween.

The main bolting of the front bulkhead 13 to the floor 12 is through the end pillars 18 which are bolted as indicated at 32 and 33 to two parallel adjacent main chassis members 17, the bolting connections 32 being at right angles to the bolting connections 33.

The intermediate channel sections 20 are of heavy duty metal compared with the end pillars 18 and the central section 19 and the main bolting of the front bulkhead 13 to the body main frame of the vehicle is through the end pillars 18 as described above.

The width of the front bulkhead 13 is determined by the width of the central section 19 which is non-load bearing in nature.

The bolts employed at 32 and 33 are preferably of predetermined shear strength or capacity.

Referring now to Figs. 6 and 7 there is secured to each side of the van body 10 at the rear a housing plate 34 of cranked construction to which is welded a gusset plate 35 both of which are fitted, by welding for example, to the rear bearer or chassis member 16 of the floor 11, the housing plate 34 also being secured by welding for example, to the main chassis member 17.

A slim-line end pillar 36 is bolted to the housing plate 34 as indicated at 37. These slim-line end pillars 36 form part of the rear bulkhead 12 and are bridged by doors 38 hinged to the end pillars 36 as indicated at 39 whereby access to the interior of the van body 10 from the rear can be achieved.

Alternatively, the rear bulkhead 12 may be of closed construction formed, for example of inter-bolted channel sections 19 and 20 and the end pillars 36.

The slim-line end pillars 36 each consist of two oppositely directed channel formations in one of which is fitted a strengthening or reinforcing tubular member 40 to permit the doors 38 to be hung by the hinges 39 from the end pillars 36.

The end pillars 36 at their tops have welded therebetween a header 41 which is adapted to nest in a top inverted channel structural member 42 which carries a rear gutter 43 and to be bolted in position therein as indicated generally at 44.

The bolts 37 and 44 are preferably of predetermined shear strength or capacity.

Due to the bolted construction of the front bulkhead 13, it will be subjected to a controlled collapse if the van body 10 impacts at the top on, for example, a bridge or other low structure.

As the front bulkhead 13 is of bolted construction, unlike the current practice of being welded to the body main frame of the vehicle, any top impact is transferred to the bolting anchorages 32, 33 which will shear if the impact is of sufficient force, thereby obviating or mitigating the upward bending of the front of a trailer, if the van body 10 is mounted or forms part of a trailer, and the need for expensive straightening of the trailer front. High impacts to a van body mounted on or forming part of a trailer can cause damage to the critical point above the rear spring hangers adjacent to the gear box mounting in the region of air pressure tanks, battery carriers, exhaust brackets, inter alia, are mounted, and such damage is obviated or mitigated by the controlled collapse of the bolted construction of the front bulkhead according to the present invention.

The use of bolts of predetermined shear strength permits the van body structure to be "tuned" to comply with current load bearing demands.

The formation of the front bulkhead from end pillars and different channel sections bolted together means that where damage occurs either the damaged end pillar or channel section or sections can be repaired or a replacement end pillar or channel section can be supplied "off the shelf".

If the van body is reversed bringing the rear bulkhead 12 into impact with an obstruction then here again due to the bolted nature of the rear bulkhead 12 a controlled collapse will occur and again only damaged parts of the rear bulkhead 12 would require replacement.

The van body is shown as having an intermediate swinging pillar 45 having arms 46 pivoted top and bottom to the roof 10 and floor 11 of the van body. An example of such a swinging pillar is disclosed in EP 0051931(UK). The housing 47 for the bottom arm 46 is usually welded to the adjacent main chassis member 17 but, in this instance, it is of bolted construction as indicated at 48.

Here again, an impact on the swinging pillar 45 will be less damaging than would be the case with the usual welded construction due to bolt shearing.

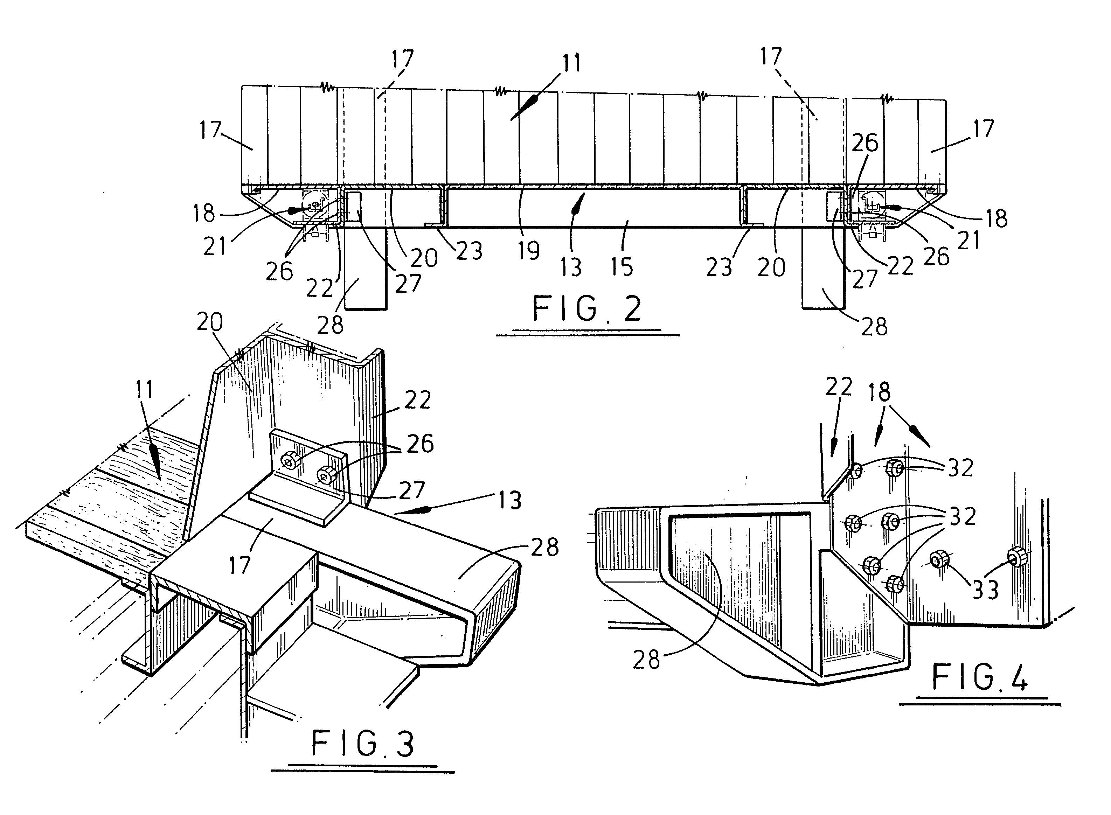

Fig. 9 shows the van body being inwardly tapered towards the top at the front ends pillars 18 as indicated at 49 to facilitate movement of the curtain along its top track during engagement of same in the tensioning mechanism 21.

The bulkhead structures according to this invention are especially but not exclusively applicable to van bodies having self supporting roofs and can be adapted to sliding posts which have no true physical connection between the roof and floor.

## Claims

1. A front bulkhead for a curtainsided van body comprising a plurality of side-by-side sections including two end pillars bolted together, and adapted to be bolted to the chassis of the van body.

2. A curtainsided van body including a front bulkhead comprising a plurality of side-by-side sections including two end pillars bolted together and the front bulkhead being bolted to the floor of the van body.

3. A curtainsided van body as claimed in claim 2, in which the front bulkhead is bolted to the van body roof.

4. A curtainsided van body as claimed in claim 2 or 3, in which the sections from which the bulkhead is formed and the end pillars are of channel section.

5. A curtainsided van body as claimed in claim 4, in which the end pillars and bulkhead channel sections are arranged in inter-engaging relationship.

6. A curtainsided van body as claimed in claim 4 or 5, in which the bulkhead is constituted by five components, namely two end pillars, two intermediate channel sections and a central channel section.

7. A curtainsided van body as claimed in any one of claims 2 to 6, in which the end pillars and bulkhead channel sections are bolted together by a plurality of vertically spaced nuts and bolts connecting adjacent contiguous surfaces thereof.

8. A curtainsided van body as claimed in claim 6 or 7, in which each intermediate bulkhead channel section has connected thereto, at its bottom, preferably by bolting, a locating member resting on a main bearer or chassis member of the van body.

9. A curtainsided van body as claimed in any one of claims 2 to 8, in which the bulkhead is connected to main bearers or chassis members of the van body by bolting the end pillars thereto.

10. A curtainsided van body as claimed in claim 9, in which each end pillar is bolted to two adjacent main bearers or chassis members at locations disposed at right angles to one another.

11. A curtainsided van body as claimed in any one of claims 6 to 10, in which the intermediate sections are formed of heavy duty metal relative to the outer pillars and the central section.

12. A curtainsided van body as claimed in any one of claims 6 to 11, in which the width of the central section can vary to provide bulkheads of overall different widths.

13. A curtainsided van body as claimed in any one of claims 2 to 12, in which the bolting connections are made by bolts of predetermined shear strength.

14. A curtainsided van body as claimed in any one of claims 2 to 13, comprising a rear bulkhead comprising end pillars bolted to a main bearer or chassis member of the van body.

15. A curtainsided van body as claimed in claim 14, in which the rear end pillars are connected by a top header bolted to the roof of the van body.

16. A curtainsided can body as claimed in claim 14 or 15, in which the rear bulkhead mounts two vertically-hinged access doors.

17. A curtainsided van body, substantially as hereinbefore described with reference to the accompanying drawings.

FIG.1

FIG.5

FIG.6

FIG.7

FIG.8

FIG.9

FIG. 2

FIG. 3

FIG. 4

EP 0 387 021 A2